(19) Europäisches Patentamt
European Patent Office
Office européen des brevets

(11) **EP 2 582 556 B1**

(12) **FASCICULE DE BREVET EUROPEEN**

(45) Date de publication et mention
de la délivrance du brevet:
**16.04.2014 Bulletin 2014/16**

(21) Numéro de dépôt: **11724419.4**

(22) Date de dépôt: **08.06.2011**

(51) Int Cl.:
***B60S 1/52*** *(2006.01)*

(86) Numéro de dépôt international:
**PCT/EP2011/059451**

(87) Numéro de publication internationale:
**WO 2011/160952 (29.12.2011 Gazette 2011/52)**

(54) **BALAI D'ESSUIE-GLACE A DISPOSITIF D'ASPERSION INTEGRE**

SCHEIBENWISCHERBLATT MIT INTEGRIERTER SPRÜHVORRICHTUNG

WINDSHIELD WIPER BLADE HAVING AN INTEGRATED SPRAYING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.06.2010 FR 1002496**

(43) Date de publication de la demande:
**24.04.2013 Bulletin 2013/17**

(73) Titulaire: **Valeo Systèmes d'Essuyage
78321 Le Mesnil Saint Denis (FR)**

(72) Inventeurs:
• **MARQUET, Chantal**
**F-43100 Brioude (FR)**
• **PETITET, Gilles**
**F-63500 Issoire (FR)**

(74) Mandataire: **Callu Danseux, Violaine
Valeo Systèmes d'Esssuyage
8, rue Louis Lormand
78321 Le Mesnil Saint Denis (FR)**

(56) Documents cités:
**EP-A2- 1 209 050      FR-A1- 2 929 906
FR-A1- 2 929 907      JP-U- 63 152 759**

**Description**

La présente invention concerne les balais d'essuyage pour vitre de véhicule automobile intégrant un dispositif d'aspersion de liquide.

La présente invention concerne plus précisément les balais d'essuyage comprenant une monture de support d'orientation principale longitudinale, avec des moyens inférieurs de support d'une raclette d'essuyage, ladite monture de support étant destinée à être entraînée en mouvement selon une trajectoire prédéterminée sur un cycle de balayage de la vitre entre deux positions extrêmes, et un dispositif d'aspersion de liquide de nettoyage comprenant au moins un premier ensemble d'orifices d'aspersion alignés selon ladite orientation principale longitudinale sur au moins une partie d'un premier côté du balai de façon à permettre l'aspersion de liquide de lavage en avant du balai par rapport au mouvement de balayage.

Pour certains balais connus, un nettoyage amélioré de la vitre est obtenu en prévoyant d'amener le liquide de lavage alternativement d'un côté ou de l'autre du balai, selon que le balai se déplace vers sa position dite « opposée arrêt fixe » (par exemple de bas en haut dans le cas d'une trajectoire classique circulaire ou elliptique du balai lors d'un cycle d'essuyage), ou vers sa position dite « arrêt fixe » (de haut en bas pour une trajectoire circulaire ou elliptique), de façon à ce que le liquide arrose effectivement une portion de la vitre qui va immédiatement être balayée par le balai d'essuyage. A cet effet, le dispositif d'aspersion comprend non plus un seul, mais deux ensembles d'orifices d'aspersion sous forme de deux rampes disposées de chaque côté du balai. Un balai de ce type est par exemple décrit dans le document WO2007/000346 au nom de la Demanderesse.

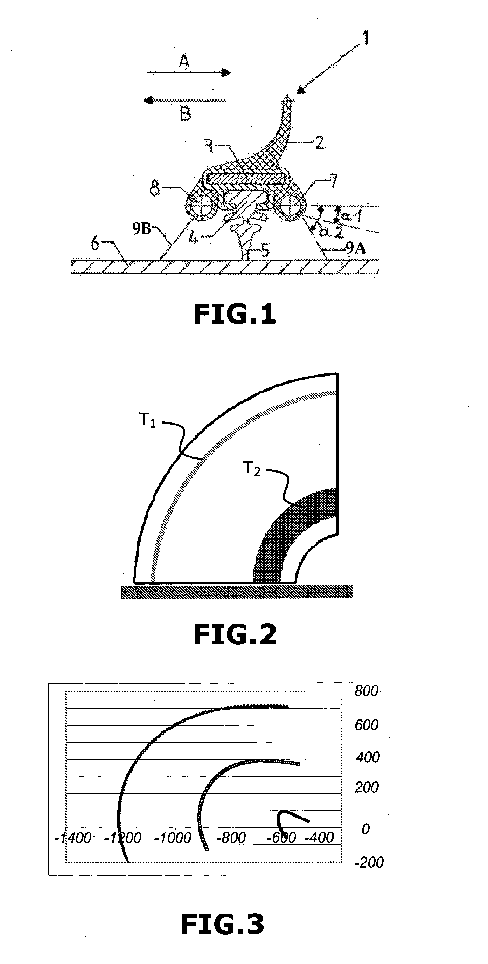

Ainsi, dans les balais connus de type balai plat, encore appelés « flat-blade » en terminologie anglo-saxonne, la monture de support d'orientation principale longitudinale comporte un corps tubulaire d'axe principal longitudinal à l'intérieur duquel est inséré une vertèbre en forme de lame horizontale longitudinale. La figure 1 illustre en coupe transversale un exemple de réalisation d'un tel balai 1 muni d'un dispositif d'aspersion bi-rampes. Sur cette figure, la monture de support porte la référence 2, la vertèbre porte la référence 3 et la raclette d'essuyage porte la référence 4, avec une partie 5 destinée à rester contre la vitre 6 lors du cycle de balayage schématisé par le déplacement selon les flèches A et B. Le support intègre également une partie formant déflecteur dans laquelle deux canaux 7 et 8 d'acheminement de fluide de lavage sont pratiqués de part et d'autre du balai. Des orifices d'aspersion sont pratiqués le long de ces deux canaux. Ainsi, les orifices d'aspersion du canal 7 permettent l'aspersion de jets 9A lorsque le balai est déplacé dans le sens de la flèche A, et les orifices d'aspersion du canal 8 permettent l'aspersion de jets 9B lorsque le balai est déplacé dans le sens de la flèche B.

On s'intéresse dans la suite plus particulièrement à la disposition des orifices d'aspersion d'un côté (dispositif mono rampe) ou des deux côtés (dispositif à deux rampes) du balai d'essuyage.

Lors de la conception d'un balai d'essuyage à fonction de lavage intégrée, il est important de savoir répondre aux trois exigences suivantes attendues par le conducteur du véhicule :

- élimination de la poussière et de la saleté ;
- aspersion homogène du liquide de nettoyage ;
- bonne visibilité même pendant le cycle d'essuyage et de lavage.

L'efficacité de lavage liée à un balai muni d'un système d'aspersion mono rampe ou bi rampes peut être caractérisée par deux grandeurs physiques :

- la force de nettoyage : il s'agit de la force induite par le contact entre le jet de liquide de nettoyage et la vitre. Elle doit être la plus importante de sorte à permettre le décollement des impuretés adhérentes à la vitre.
- la vitesse d'étalement : il s'agit du temps mis par le liquide pour s'étaler sur la vitre. Elle doit être suffisamment grande pour que le liquide projeté au niveau d'un orifice d'aspersion ait le temps, avant le passage du balai, de former une flaque possédant une interaction (zone de recouvrement) avec celle réalisée par l'orifice voisin situé dans la même rampe au cours du mouvement du balai.

En outre, la flaque issue de chaque orifice d'aspersion ne doit pas être trop importante pour ne pas gêner la visibilité du conducteur.

Au vu de ce qui précède, on constate que le pas d'écartement entre deux orifices d'une rampe constitue une grandeur physique importante.

Or, dans les balais connus, tels que par exemple décrits dans le document précités, le pas entre les orifices d'aspersion d'une même rampe est constant.

En outre, même si quelques systèmes prévoient que le balai soit déplacé parallèlement à lui-même d'un côté à l'autre de la vitre selon un mouvement de trajectoire rectiligne, la plupart des systèmes d'essuyage propose d'entraîner le balai selon un mouvement de trajectoire circulaire, voire elliptique. Le choix jusqu'ici pris d'une répartition des orifices d'aspersion selon une distribution uniforme ne permet pas d'obtenir un nettoyage suffisamment efficace pour ce type de balai. En effet, lors d'un cycle de balayage, la distance parcourue par chaque point du balai, et notamment par chaque orifice d'aspersion, n'est pas la même pour tous les points. Ainsi, si la même quantité d'eau est projetée par unité de temps sur le pare-brise, l'efficacité de lavage ne sera pas la même en haut et en bas de balai. En outre, la vitesse linéique de déplacement d'un point du balai lors d'un mouvement de balayage circulaire ou elliptique est plus grande pour un point situé en haut du balai que pour un point situé en bas du balai. Ainsi, lorsque le pas des orifices d'aspersion est choisi constant, la vitesse d'étalement précitée sera moins grande pour les orifices d'aspersion situés en haut du balai, et la zone de recouvrement résultante pour deux orifices voisins sera également moins grande que pour deux orifices voisins situés en bas du balai.

La présente invention a pour objectif de pallier les inconvénients précités en proposant un balai d'essuyage offrant la même efficacité d'essuyage et de lavage en tout point du balai.

Pour ce faire, la présente invention a pour objet un balai d'essuyage pour vitre de véhicule automobile comprenant une monture de support d'orientation principale longitudinale, avec des moyens inférieurs de support d'une raclette d'essuyage, ladite monture de support étant destinée à être entraînée en mouvement selon une trajectoire prédéterminée sur un cycle de balayage de la vitre entre deux positions extrêmes, et un dispositif d'aspersion de liquide de nettoyage comprenant au moins un premier ensemble d'orifices d'aspersion alignés selon ladite orientation principale longitudinale sur au moins une partie d'un premier côté du balai de façon à permettre l'aspersion de liquide de lavage en avant du balai par rapport au mouvement de balayage, caractérisé en ce que les orifices d'aspersion sont répartis sur ledit premier côté avec un espacement non constant, la distance séparant deux orifices successifs étant choisie de sorte que la portion de surface de vitre effectivement aspergée par un orifice d'aspersion lors d'un cycle de balayage soit sensiblement égale à la même valeur cible pour tous les orifices d'aspersion du premier ensemble.

Dans un mode de réalisation préféré dans lequel le système d'aspersion est bi-rampe, le balai comporte en outre un deuxième ensemble d'orifices d'aspersion alignés selon ladite orientation principale longitudinale sur au moins une partie d'un deuxième côté du balai opposé audit premier côté, et les orifices d'aspersion du deuxième ensemble sont répartis sur ledit deuxième côté avec un espacement non constant, la distance séparant deux orifices successifs étant choisie de sorte que la portion de surface de vitre effectivement aspergée par un orifice d'aspersion lors d'un cycle de balayage soit sensiblement égale à la même valeur cible pour tous les orifices d'aspersion du deuxième ensemble.

Dans ce cas, sur la partie du premier et du deuxième côté du balai, les orifices d'aspersion du premier ensemble sont alternés, suivant l'orientation principale longitudinale, avec les orifices du deuxième ensemble.

La présente invention et les avantages qu'elle procure seront mieux compris au vu de la description suivante faite en référence aux figures annexées, dans lesquelles :

- la figure 1, déjà décrite, représente en coupe transversale, une structure de balai possible pour laquelle la présente invention peut être appliquée ;

- la figure 2 illustre schématiquement deux traces d'aspersions obtenues sur un demi-cycle de balayage pour un balai entraîné sur une vitre selon un mouvement de trajectoire elliptique, pour deux orifices d'aspersion situés d'un même côté, respectivement en haut et en bas du balai ;

- les figures 3 et 4 illustrent les résultats de simulation validant le principe de l'invention appliqué à un balai apte à être déplacé selon un mouvement de trajectoire circulaire ou elliptique ;

- les figures 5a à 5c représentent, sous forme de synoptiques, trois algorithmes de calculs possible pour le placement des orifices d'aspersion sur un même côté du balai selon les principes de l'invention ;

- les figures 6 à 8 illustrent les résultats de simulation obtenus conformément à l'invention pour un balai bi rampe apte à être déplacé selon un mouvement de trajectoire circulaire ou elliptique.

L'invention repose sur le principe qu'une même efficacité de lavage et d'essuyage peut être obtenue en tout orifice d'aspersion du balai, et ce, même si les orifices ne parcourent pas la même distance lors du déplacement du balai selon une trajectoire prédéterminée pendant un cycle d'essuyage, en prévoyant de répartir les orifices d'aspersion sur un côté du balai avec un espacement non constant, calculé pour chaque orifice de manière à ce que la portion de surface de vitre effectivement aspergée par un orifice d'aspersion lors d'un cycle de balayage soit sensiblement égale à la même valeur cible pour tous les orifices d'aspersion du premier ensemble.

Pour le cas non limitatif du balai à déplacement circulaire ou elliptique, on a représenté sur la figure 1, deux traces $T_1$ et $T_2$ correspondant chacune à la portion de surface de vitre effectivement aspergée que l'on souhaite obtenir pour un orifice situé respectivement dans la partie d'extrémité haute et dans la partie d'extrémité basse du balai. Ces deux traces ne possèdent pas la même largeur mais une largeur propre telle que, selon l'invention, la surface occupée par la trace $T_1$ soit sensiblement la même que la surface occupée par la trace $T_2$.

Les essais de la Demanderesse ont permis de montrer que la surface couverte par chaque orifice d'aspersion situé d'un même côté d'un balai de ce type est égale à une constante $K$ pour tous les points solutionnant le système d'équation suivant :

$$D_i \times \Delta x_i = K$$

$$D_i = ax_i + b$$

$$\Delta x_i = x_i - x_{i-1}$$

$$\sum_{j=0}^{N} \Delta x_i = x_N - x_0 = L'$$

dans lequel K est la valeur cible pour la portion de surface constante que l'on recherche, $x_i$ correspond à la position d'un orifice le long de l'orientation principale longitudinale du balai, $\Delta x_i$ est la distance séparant deux orifices d'aspersion consécutifs sur le balai, N+1 le nombre total d'orifice d'aspersion sur un même côté du balai, et L' la longueur de la partie du côté de balai sur laquelle on souhaite répartir les orifices.

Ce système d'équations traduit sous forme mathématique le fait que l'on recherche une même portion de surface d'aspersion K pour chaque orifice d'aspersion de position $x_i$, sachant que la distance $D_i$ parcourue par chaque orifice de position $x_i$ varie linéairement en fonction de la position $x_i$.

La figure 3 représente la trajectoire de trois points d'un balai projetée dans un plan (la trajectoire d'un point du balai étant en pratique dans un espace à 3 dimensions) pour un système d'essuyage elliptique. Cette figure montre l'évolution de la différence de longueur parcourue par des points du balai pour une trajectoire non circulaire.

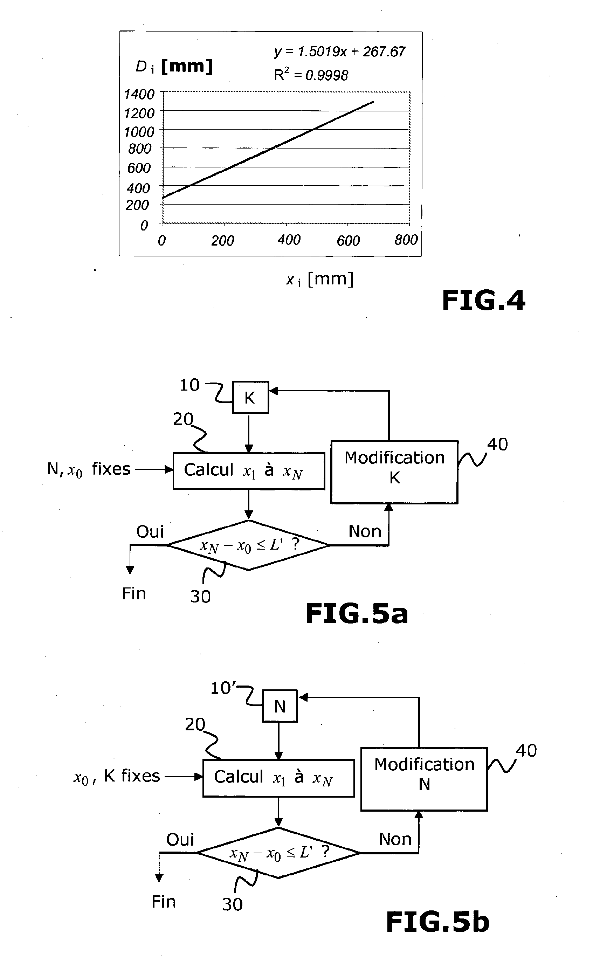

La courbe représentée sur la figure 4 illustre les variations de la distance $D_i$ en fonction de la position $x_i$ obtenues par simulation. La droite obtenue valide ainsi le fait que la distance $D_i$ varie bien linéairement en fonction de la position $x_i$. Il convient de noter que cette hypothèse reste valable dans le cas des trajectoires elliptiques.

Le système d'équations précédent peut s'écrire :

$$(ax_i + b) \times (x_i - x_{i-1}) = K$$

$$\sum_{j=0}^{N} \Delta x_i = x_N - x_0 = L'$$

Soit :

$$ax_i^2 - ax_i x_{i-1} + bx_i - bx_{i-1} = K$$

$$\sum_{j=0}^{N} \Delta x_i = x_N - x_0 = L'$$

Cette équation du second degré en $x_i$ peut être résolue avec différents algorithmes :

Selon un premier algorithme possible, dont les étapes sont schématisées sur la figure 5a, on choisit d'une part (étape 10) une première valeur possible de K, et l'on fixe d'autre part le nombre total N+1 de trous que l'on souhaite avoir sur un côté du balai, et la position $x_0$ du premier trou en partant d'une extrémité du balai. On peut alors calculer (étape 20) l'ensemble des valeurs $x_1$ à $x_N$ solutions du système d'équation. On vérifie alors (étape 30) si la dernière valeur $x_N$ est bien cohérente avec la longueur L', c'est-à-dire si

$$x_N - x_0 \leq L'$$

Si tel n'est pas le cas, on change (étape 40) la valeur de K et l'on recommence le calcul des différentes positions $x_1$ à $x_N$ jusqu'à obtenir une cohérence avec la longueur L'.

Selon un deuxième algorithme possible dont les étapes sont schématisées sur la figure 5b, la valeur de K et la position $x_0$ du premier trou sont imposées, on choisit (étape 10') une première valeur pour N, et c'est le nombre N+1 de trous qui va être modifié (étape 40') jusqu'à obtenir des positions $x_1$ à $x_N$ en cohérence avec la longueur L'. Les étapes de calcul 20 et 30 sont identiques à celles explicitées en référence à la figure 4a.

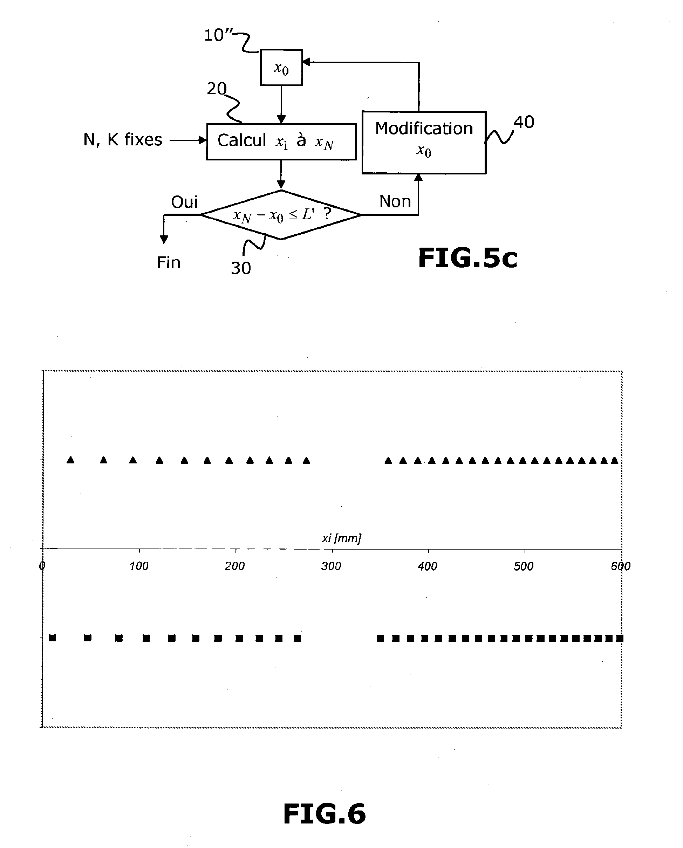

Enfin, selon un troisième algorithme possible dont les étapes sont schématisées sur la figure 5c, les valeurs de K et de N+1 sont imposées, et l'on teste (étapes 10" et 40") plusieurs positions $x_0$ possibles pour le premier trou, jusqu'à obtenir des positions $x_1$ à $x_N$ qui soient cohérentes avec la longueur L'. Ici encore, les étapes de calcul 20 et 30 sont identiques à celles explicitées en référence à la figure 5a.

Dans les trois algorithmes précédents, deux des trois paramètres sont fixes, et l'on détermine la valeur du troisième paramètre qui permet d'obtenir des positions d'orifices qui soient cohérentes avec la longueur L'. D'autres algorithmes dans lesquels seul un voire aucun paramètre n'est fixé au départ, peuvent néanmoins être développés sans sortir du cadre de la présente invention.

Certaines contraintes supplémentaires peuvent être avantageusement prises en considération selon la structure exacte du balai considéré :

Ainsi, dans les structures de type « flat-blade » telles que précédemment décrites en référence à la figure 1, des connecteurs d'extrémités (non visibles) sont généralement prévus pour maintenir ensemble la vertèbre 3 à l'intérieur de la monture support. Dans un tel cas, les orifices d'aspersion ne pourront pas être répartis sur la totalité de la longueur L du balai mais seulement sur une portion de longueur L' correspondant au maximum à la longueur totale du balai minorée des parties destinées à recevoir les connecteurs d'extrémités.

En outre, dans de telles structures, un élément de liaison ou connecteur est également monté sur la monture support pour permettre la liaison du balai avec un bras d'entraînement. Le connecteur est alors doté d'une fonction hydraulique avec des canaux d'acheminement du liquide vers les rampes, et l'on peut prévoir que la partie aérodynamique du balai soit réalisée en deux demi-parties qui viennent se fixer sur la monture support de part et d'autre du connecteur de sorte que les canaux d'acheminement du balai soient alignés avec les canaux d'acheminement du connecteur. Un exemple d'un tel balai est par exemple décrit dans le document WO 2010/006775 au nom de la Demanderesse. Pour de telles structures, la répartition des orifices d'aspersion peut être calculée selon les algorithmes de la présente invention, en omettant la partie destinée à recevoir le connecteur.

On peut également prévoir que le pas entre deux orifices d'aspersion successifs ne dépasse pas une certaine valeur limite, ou soit compris entre deux valeurs limites.

Les figures 6 à 8 illustrent les résultats de calcul obtenus selon l'invention pour la répartition des orifices d'aspersion sur les deux côtés d'un balai utilisant deux demi-spoilers de part et d'autre d'un connecteur :

Sur la figure 6, les triangles représentent la position des orifices d'aspersion sur un côté du balai, et les carrés représentent la position des orifices d'aspersion sur l'autre côté du balai. Comme on peut le constater, la partie centrale, destinée à recevoir le connecteur, ne comprend aucun orifice d'aspersion. Par ailleurs, les orifices d'aspersion sont plus espacés vers le balai du balai ($x_i$ faibles) que vers le haut du balai ($x_i$ forts), ce qui permet de compenser la différence de vitesse linéique. Enfin, de façon avantageuse, les orifices d'aspersion situés d'un même côté du balai sont alternés par rapport aux orifices d'aspersion situés de l'autre côté du balai. Ainsi, on augmente les chance qu'une impureté non nettoyée lors du premier balayage de la vitre le soit lors du second passage du balai pendant un même cycle de balayage.

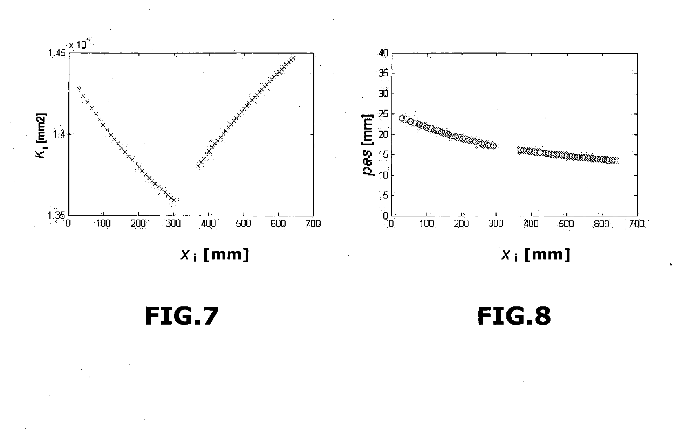

La figure 7 montre la valeur cible K obtenue pour chacune des positions calculées pour les orifices d'aspersion. On constate que cette valeur cible est sensiblement constante (ici comprise entre 1,35 $\times 10^4$ et 1,45 $\times 10^4$ mm$^2$). Enfin, la figure 8 représente les variations du pas entre les orifices d'aspersion. On constate sur cette figure que la distance séparant deux orifices successifs est toujours comprise entre 15 et 25 millimètres.

L'invention a été décrite dans le cadre d'un balai plat dit de seconde génération comprenant une monture de support dans laquelle s'insère longitudinalement une vertèbre, cependant l'invention trouve également application sur les balais plats dits de première génération.

Ces balais plats de première génération comprennent généralement une monture de support s'étendant longitudinalement, qui est constituée dans sa partie inférieure d'une lame formant raclette destinée à frotter contre la vitre à essuyer, et dans sa partie supérieure d'un talon de fixation pourvu d'un déflecteur. Des vertèbres de rigidification (généralement au nombre de deux) sont reçues chacune dans une rainure complémentaire réalisée dans un bord latéral du talon.

De même que dans les balais plats de seconde génération, le déflecteur intègre des canaux d'acheminement de liquide de lavage.

Par ailleurs, bien que l'invention ait été décrite dans le cas de figure particulier où le balai est destiné à être déplacé selon une trajectoire circulaire ou elliptique, le principe de l'invention est applicable à d'autres types de trajectoires, et présentent un intérêt dès lors que la trajectoire implique que tous les points du balai ne parcourent pas la même distance pendant un cycle de balayage.

## Revendications

1. Balai (1) d'essuyage pour vitre (6) de véhicule automobile comprenant une monture (2) de support d'orientation principale longitudinale, avec des moyens inférieurs présentant une raclette (4) d'essuyage, ladite monture (2) de support étant destinée à être entraînée en mouvement selon une trajectoire prédéterminée sur un cycle de balayage de la vitre (6) entre deux positions extrêmes, et un dispositif d'aspersion de liquide de nettoyage comprenant au moins un premier ensemble d'orifices d'aspersion alignés selon ladite orientation principale longitudinale sur au moins une partie d'un premier côté du balai de façon à permettre l'aspersion de liquide de lavage en avant du balai par rapport au mouvement de balayage, **caractérisé en ce que** les orifices d'aspersion sont répartis sur ledit premier côté avec un espacement non constant, la distance séparant deux orifices successifs étant choisie de sorte que la portion de surface de vitre effectivement aspergée par un orifice d'aspersion lors d'un cycle de balayage soit sensiblement égale à la même valeur cible pour tous les orifices d'aspersion du premier ensemble.

2. Balai d'essuyage selon la revendication 1, **caractérisé en ce qu'il** comporte en outre un deuxième ensemble d'orifices d'aspersion alignés selon ladite orientation principale longitudinale sur au moins une partie d'un deuxième côté du balai opposé audit premier côté, et **en ce que** les orifices d'aspersion du deuxième ensemble sont répartis sur ledit deuxième côté avec un espacement non constant, la distance séparant deux orifices successifs étant choisie de sorte que la portion de surface de vitre effectivement aspergée par un orifice d'aspersion lors d'un cycle de balayage soit sensiblement égale à la même valeur cible pour tous les orifices d'aspersion du deuxième ensemble.

**3.** Balai d'essuyage selon la revendication 2, **caractérisé en ce que,** sur la partie du premier et du deuxième côté du balai, les orifices d'aspersion du premier ensemble sont alternés, suivant l'orientation principale longitudinale, avec les orifices du deuxième ensemble.

**4.** Balai d'essuyage selon l'une quelconque des revendications précédentes, **caractérisé en ce que** la trajectoire prédéterminée est circulaire ou elliptique, **et en ce que** ladite distance séparant deux orifices successifs est choisie par résolution du système d'équations suivant

$$ax_i^2 - ax_i x_{i-1} + bx_i - bx_{i-1} = K$$

$$\sum_{j=0}^{N} \Delta x_i = x_N - x_0 = L'$$

dans lequel K correspond à ladite valeur cible, N+1 correspond au nombre total d'orifices d'aspersion, $x_i$ correspond à la position d'un orifice le long de ladite orientation principale longitudinale, L' correspond à la longueur de la partie le long de laquelle les orifices sont répartis, et $\Delta x_i$ représente la distance séparant deux orifices d'aspersion consécutifs.

**5.** Balai d'essuyage selon la revendication 4, **caractérisé en ce que** la résolution dudit système d'équation consiste, pour un nombre d'orifices d'aspersion et une valeur cible K fixes, à faire varier la valeur de la position $x_0$ du premier orifice jusqu'à trouver l'ensemble des positions $x_1$ à $x_N$ solutions du système et pour lesquelles

$$x_N - x_0 \leq L'.$$

**6.** Balai d'essuyage selon la revendication 4, **caractérisé en ce que** la résolution dudit système d'équation consiste, pour une valeur cible K et une position $x_0$ du premier orifice fixes, à faire varier le nombre N jusqu'à trouver l'ensemble des positions $x_1$ à $x_N$

solutions du système et pour lesquelles

$$x_N - x_0 \leq L'.$$

**7.** Balai d'essuyage selon la revendication 4, **caractérisé en ce que** la résolution dudit système d'équation consiste, pour un nombre d'orifices d'aspersion et une position $x_0$ du premier orifice fixes, à faire varier la valeur cible K jusqu'à trouver l'ensemble des positions $x_1$ à $x_N$ solutions du système et pour lesquelles

$$x_N - x_0 \leq L'.$$

**Patentansprüche**

**1.** Wischblatt (1) für eine Kraftfahrzeugglasscheibe (6), umfassend ein Stützgestell (2) mit länglicher Hauptausrichtung mit unteren Mitteln, die eine Wischleiste (4) aufweisen, wobei das Stützgestell (2) dazu bestimmt ist, bei einem Wischzyklus der Glasscheibe (6) bewegungsmäßig entlang einer vorbestimmten Bahn zwischen zwei Endpositionen angetrieben zu werden, und eine Reinigungsflüssigkeitssprühvorrichtung, die mindestens eine erste Gruppe von Sprühöffnungen umfasst, die gemäß der länglichen Hauptausrichtung an mindestens einem Teil einer ersten Seite des Blatts ausgerichtet sind, damit Waschflüssigkeit hinsichtlich der Wischbewegung vor das Blatt gesprüht werden kann, **dadurch gekennzeichnet, dass** die Sprühöffnungen mit nicht konstanten Abständen über die erste Seite verteilt sind, wobei der Abstand zwischen zwei aufeinanderfolgenden Öffnungen so gewählt ist, dass der Glasscheibenoberflächenabschnitt, der bei einem Wischzyklus effektiv durch eine Sprühöffnung besprüht wird, im Wesentlichen gleich demselben Zielwert für alle Sprühöffnungen der ersten Gruppe ist.

**2.** Wischblatt nach Anspruch 1, **dadurch gekennzeichnet, dass** es ferner eine zweite Gruppe von Sprühöffnungen umfasst, die gemäß der länglichen Hauptausrichtung an mindestens einem Teil einer der ersten Seite gegenüberliegenden zweiten Seite des Blatts ausgerichtet sind und dass die Sprühöffnungen der zweiten Gruppe mit nicht konstanten Abständen über die zweite Seite verteilt sind, wobei der Abstand zwischen zwei aufeinanderfolgenden Öffnungen so gewählt ist, dass der Glasscheibenoberflächenabschnitt, der bei einem Wischzyklus effektiv durch eine Sprühöffnung besprüht wird, im Wesentlichen gleich demselben Zielwert für alle Sprühöffnungen der zweiten Gruppe ist.

**6**

**3.** Wischblatt nach Anspruch 2, **dadurch gekennzeichnet, dass** sich die Sprühöffnungen der ersten Gruppe an dem Teil der ersten und der zweiten Seite des Blatts gemäß der länglichen Hauptausrichtung mit den Öffnungen der zweiten Gruppe abwechseln.

**4.** Wischblatt nach einem der vorhergehenden Ansprüche, **dadurch gekennzeichnet, dass** die vorbestimmte Bahn kreisförmig oder elliptisch ist und dass der Abstand zwischen zwei aufeinanderfolgenden Öffnungen gemäß der Lösung des folgenden Gleichungssystems gewählt ist:

$$ax_i^2 - ax_i x_{i-1} + bx_i - bx_{i-1} = K$$

$$\sum_{j=0}^{N} \Delta x_i = x_N - x_0 = L'$$

in dem K dem Zielwert entspricht, N + 1 der Gesamtzahl von Sprühöffnungen entspricht, $x_i$ der Position einer Öffnung entlang der länglichen Hauptausrichtung entspricht, L' der Länge des Teils, entlang dem die Öffnungen verteilt sind, entspricht und $\Delta x_i$ für den Abstand zwischen zwei aufeinanderfolgenden Sprühöffnungen steht.

**5.** Wischblatt nach Anspruch 4, **dadurch gekennzeichnet, dass** die Lösung des Gleichungssystems für eine feststehende Anzahl von Sprühöffnungen und einen feststehenden Zielwert K darin besteht, dass der Wert der Position $x_0$ der ersten Öffnung variiert wird, bis alle Positionen $x_1$ bis $x_N$, bei denen es sich um die Lösungen des Systems handelt und für die $x_N - x_0 \leq L'$ gilt, gefunden sind.

**6.** Wischblatt nach Anspruch 4, **dadurch gekennzeichnet, dass** die Lösung des Gleichungssystems für einen feststehenden Zielwert K und eine feststehende Position $x_0$ der ersten Öffnung darin besteht, dass die Anzahl N variiert wird, bis alle Positionen $x_1$ bis $x_N$, bei denen es sich um die Lösungen des Systems handelt und für die $x_N - x_0 \leq L'$ gilt, gefunden sind.

**7.** Wischblatt nach Anspruch 4, **dadurch gekennzeichnet, dass** die Lösung des Gleichungssystems für eine feststehende Anzahl von Sprühöffnungen und eine feststehende Position $x_0$ der ersten Öffnung darin besteht, dass der Zielwert K variiert wird, bis alle Positionen $x_1$ bis $x_N$, bei denen es sich um die Lösungen des Systems handelt und für die $x_N - x_0 \leq L'$ gilt, gefunden sind.

**Claims**

**1.** Screen wiper (1) for a motor vehicle screen (6) comprising a support frame (2) of principal longitudinal orientation, having lower means exhibiting a wiper blade (4), the said support frame (2) being intended to be caused to move between two end positions along a predetermined trajectory during a wiping cycle of the screen (6), and a device for spraying cleaning liquid comprising at least one first set of spraying orifices aligned in the said principal longitudinal orientation for at least one part of a first side of the wiper in such a way as to permit the spraying of washing liquid in front of the wiper in relation to the wiping movement, **characterized in that** the spraying orifices are distributed over the said first side with a non-constant spacing, the distance separating two successive orifices being selected in such a way that the portion of the surface of the screen that is effectively sprayed by a spraying orifice in the course of a wiping cycle is substantially equal to the same target value for all the spraying orifices of the first set.

**2.** Wiper blade according to Claim 1, **characterized in that** it consists in addition of a second set of spraying orifices aligned in the said principal longitudinal orientation over at least one part of a second side of the wiper opposite the said first side, and **in that** the spraying orifices of the second set are distributed over the said second side with a non-constant spacing, the distance separating two successive orifices being selected in such a way that the portion of the surface of the screen that is effectively sprayed via a spraying orifice in the course of a wiping cycle is substantially equal to the same target value for all the spraying orifices of the second set.

**3.** Wiper blade according to Claim 2, **characterized in that,** over the part of the first side and the second side of the wiper, the spraying orifices of the first set are alternated, depending on the principal longitudinal orientation, with the orifices of the second set.

**4.** Wiper blade according to one of the previous claims, **characterized in that** the predetermined trajectory is circular or elliptical, and **in that** the said distance separating two successive orifices is selected by the solution of the following system of equations

$$ax_i^2 - ax_i x_{i-1} + bx_i - bx_{i-1} = K$$

$$\sum_{j=0}^{N} \Delta x_i = x_N - x_0 = L'$$

in which K corresponds to the said target value, N+1 corresponds to the total number of spraying orifices, $x_i$ corresponds to the position of an orifice along the said principal longitudinal orientation, L' corresponds to the length of the part along which the orifices are distributed, and $\Delta x_i$ represents the distance separating two consecutive spraying orifices.

5. Wiper blade according to Claim 4, **characterized in that** the solution of the said equation system, for a fixed number of spraying orifices and a target value K, consists of varying the value of the position $x_0$ of the first orifice until the set of positions $x_1$ to $x_N$ of the system solution is found, and for which

$$x_N - x_0 \leq L' \;.$$

6. Wiper blade according to Claim 4, **characterized in that** the solution of the said equation system, for a fixed target value K and a position $x_0$ of the first orifice, consists of varying the number N until the set of the positions $x_1$ to $x_N$ of the system solution is found, and for which

$$x_N - x_0 \leq L' \;.$$

7. Wiper blade according to Claim 4, **characterized in that** the solution of the said equation system, for a fixed number of spraying orifices and a position $x_0$ of the first orifice, consists of varying the target value K until the set of the positions $x_1$ to $x_N$ of the system solution is found, and for which

$$x_N - x_0 \leq L' \;.$$

**FIG.1**

**FIG.2**

**FIG.3**

$y = 1.5019x + 267.67$
$R^2 = 0.9998$

$D_i$ [mm]

**FIG.4**

$x_i$ [mm]

10

K

20

N, $x_0$ fixes → Calcul $x_1$ à $x_N$

Modification K — 40

Oui

$x_N - x_0 \leq L'$ ?

Non

Fin

30

**FIG.5a**

10'

N

20

$x_0$, K fixes → Calcul $x_1$ à $x_N$

Modification N — 40

Oui

$x_N - x_0 \leq L'$ ?

Non

Fin

30

**FIG.5b**

**FIG.5c**

**FIG.6**

**FIG.7**

**FIG.8**

## RÉFÉRENCES CITÉES DANS LA DESCRIPTION

**Documents brevets cités dans la description**

- WO 2007000346 A
- WO 2010006775 A